# EUROPÄISCHE PATENTSCHRIFT

(11) **EP 2 326 959 B1**
(45) Veröffentlichungstag und Bekanntmachung des Hinweises auf die Patenterteilung: **01.01.2020**
(21) Anmeldenummer: 09782779.4
(22) Anmeldetag: 08.09.2009
(51) Int. Cl.: G01P 1/12, G07C 7/00, G01D 9/00, G07C 5/08

(54) **VERFAHREN ZUM FREISCHALTEN VON FUNKTIONEN EINES TACHOGRAPHEN**
METHOD FOR ACTIVATING FUNCTIONS OF A TACHOGRAPH
PROCÉDÉ DE DÉCONNEXION DE FONCTIONS D'UN TACHYGRAPHE

(30) Priorität: 15.09.2008 DE 102008047433
(43) Veröffentlichungstag der Anmeldung: 01.06.2011
(73) Patentinhaber: Continental Automotive GmbH, 30165 Hannover (DE)
(72) Erfinder: GUT, Michael, 78199 Bräunlingen (DE); MATTES, Edmund, 78549 Spaichingen (DE)
(86) Internationale Anmeldenummer: PCT/EP2009/061646
(87) Internationale Veröffentlichungsnummer: WO 2010/029084

(56) Entgegenhaltungen:
- EP-A1- 1 587 036
- EP-A2- 1 283 501
- WO-A1-94/04975
- DE-A1-102007 004 645
- US-A1- 2005 243 779

## Beschreibung

Gegenstand der Erfindung ist ein Verfahren zum Freischalten von Funktionen mindestens eines Tachographen, welcher eine Steuerungseinheit und eine damit verbundene Schnittstelle umfasst und bei dem die Steuerungseinheit programmtechnisch zur Ausführung einer ersten Gruppe von Funktionen freigeschaltet ist.

Aus dem Stand der Technik sind Tachographen, insbesondere digitale Tachographen bekannt. Ein Tachograph weist eine Steuerungseinheit sowie eine Vielzahl von verschiedenen Schnittstellen auf. Auch ein Display, welches durch einen Benutzer des Tachographen abgelesen werden kann, ist im Tachographen verbaut.

Die Steuerungseinheit des Tachographen ist derart ausgebildet, dass eine Vielzahl von Funktionen durch die Steuerungseinheit ausgeführt werden können. Dies betrifft insbesondere Funktionen wie die Aufnahme der zurückgelegten Strecke, die Fahrzeit, die während eines Streckenabschnitts gefahrene Durchschnitts-, Maximal- oder ähnliche Geschwindigkeit sowie die zurückgelegte Strecke auf einer Autobahn oder einer Landstraße. Die beispielhaften vorgenannten Funktionen werden durch einen Mikroprozessor der Steuerungseinheit ausgeführt, wobei die den Funktionen zugeordneten Daten oftmals über eine CAN-Schnittstelle von einem Bordcomputer bzw. einer Motorsteuerung empfangen werden.

Der Tachograph wird oftmals vom Hersteller des Fahrzeugs verbaut und an einen Kunden ausgeliefert. Der Tachograph selbst wird wiederum von einem anderen Hersteller hergestellt. Der Hersteller des Fahrzeugs adaptiert den Tachographen oftmals für die Spezifikationen des verwendeten Fahrzeugtyps. Dies bedeutet, dass nicht sämtliche durch die Steuerungseinheit ausführbare Funktionen freigeschaltet sein müssen. Der Mikroprozessor der Steuerungseinheit ist zwar programmtechnisch derart ausgebildet, dass er sämtliche in einem Speicherelement der Steuerungseinheit abgelegten Funktionen ausführen, jedoch nicht auf die sämtlichen vorgenannten Funktionen zugreifen kann. Die Gesamtzahl der ausführbaren Funktionen zerfällt in eine erste Gruppe bereits freigeschalteter und ausführbarer Funktionen und eine zweite Gruppe nicht freigeschalteter, jedoch vorhandener Funktionen.

Für den Betreiber des Fahrzeugs entsteht hierdurch das Problem, dass der Tachograph lediglich durch den Hersteller des Fahrzeugs konfiguriert wurde und nicht auf die individuellen Anforderungen des Kunden abgestimmt ist. Möchte der Kunde nun den Tachographen an seine eigenen Anforderungen anpassen, ist er gezwungen, das Fahrzeug in eine autorisierte Werkstatt zu bringen, in welcher die zusätzlich benötigten Funktionen von Fachpersonal freigeschaltet werden.

Die Dokumente DE 10 2007 004 645, EP 1 587 036 und WO 94/04975 offenbaren verschiedene Tachographen.

Aufgabe der vorliegenden Erfindung ist es, ein Verfahren zum Freischalten von Funktionen anzugeben, welches nicht länger erfordert, das Fahrzeug in eine Werkstatt zu bringen, und es somit erlaubt, die Ruhezeiten des Fahrzeugs auf ein Minimum zu reduzieren.

Die Aufgabe wird gelöst mittels eines Verfahrens mit den Merkmalen des Anspruchs 1.

Bei dem erfindungsgemäßen Verfahren wird ein externes Speichermedium mit der Schnittstelle des mindestens einen Tachographen verbunden, wobei das Speichermedium eine durch die Steuerungseinheit auslesbare Anweisung zum Freischalten einer Funktion aufweist. Diese Anweisung kann in Form eines ausführbaren Programmcodes oder schaltungstechnisch auf dem externen Speichermedium realisiert sein und optional die freizuschaltende Funktion beinhalten. Die durch die Steuerungseinheit auslesbare Anweisung zum Freischalten einer Funktion kann zum einen dazu führen, dass eine bereits in der Steuerungseinheit des mindestens einen Tachographen abgelegte Funktion durch die Steuerungseinheit ausführbar, d. h. freigeschaltet wird oder dass zum anderen eine bereits vorhandene Funktion durch eine aktualisierte Version der Funktion ersetzt wird. Zusätzlich kann hierunter auch verstanden werden, dass eine bislang nicht in der Steuerungseinheit abgelegte Funktion von dem externen Speichermedium auf die Steuerungseinheit übertragen wird.

Um die missbräuchliche Verwendung des externen Speichermediums zu verhindern, findet zusätzlich eine Authentifizierung zwischen dem externen Speichermedium und der Steuerungseinheit statt. Hierdurch wird sichergestellt, dass die auf dem externen Speichermedium vorhandene Anweisung zum Freischalten einer Funktion auf dem Tachographen ausgeführt werden darf. Eine derartige Authentifizierung kann beispielsweise dadurch realisiert sein, dass vor der Verbindung des externen Speichermediums mit der Schnittstelle des mindestens einen Tachographen eine sogenannte Unternehmenskarte in den Tachographen eingeführt werden muss und der zeitliche Abstand zwischen der Verbindung mit der Unternehmenskarte und dem externen Speichermedium ein festgelegtes Intervall nicht überschreiten darf. Mittels der der Unternehmenskarte zugeordneten Informationen wird sichergestellt, dass die Verbindung des externen Speichermediums mit der Schnittstelle des mindestens einen Tachographen autorisiert wird.

Bei einer positiven Authentifizierung zwischen dem externen Speichermedium und der Steuerungseinheit wird aufgrund der durch die Steuerungseinheit auslesbaren Anweisung die Freischaltung der der mindestens einen Anweisung zugeordneten Funktion ausgeführt, derart, dass die Funktion der ersten Gruppe der Steuerungseinheit zugeordnet wird.

Weiterhin wird die Verbindung zwischen dem externen Speichermedium und der Schnittstelle des mindestens einen Tachographen gelöst, so dass das externe Speichermedium für weitere Zwecke verwendet werden kann. Auch wird die Schnittstelle, welche ursprünglich durch das externe Speichermedium belegt war, für weitere Speichermedien wie beispielsweise eine Fahrerkarte freigegeben.

Dadurch, dass die Informationen zum Freischalten von Funktionen auf dem externen Speichermedium abgelegt sind und dieses Speichermedium vom Kunden selbst in den Tachographen eingelegt werden kann, entfällt der Besuch einer Werkstatt, bei welchem die Funktionen durch einen Spezialisten freigeschaltet werden müssen. Hierdurch wird der Schritt des Anpassens der Funktionalität des Tachographen an die individuellen Bedürfnisse des Kunden zum einen vereinfacht und zum anderen ohne eine aufgrund des Werkstattbesuchs erzwungene Ruhephase des Fahrzeugs ausgeführt.

Die Anweisung umfasst eine Funktion, welche eine vorhandene weitere Schnittstelle des Tachographen, vorzugsweise eine von einer dem Fahrzeuginnenraum zugewandten Seite des Tachographen zugängige Schnittstelle, derart programmtechnisch ansteuert, dass diese zu einem kabellosen Datenaustausch zwischen dem Tachographen und einer externen Datenverarbeitungsanlage ausgebildet wird.

Durch das Freischalten einer derartigen Funktion ist es anschließend möglich, ohne vorheriges Einschieben der Unternehmenskarte in den Tachographen das Herunterladen von durch den Tachographen erfassten Daten zum Fahrzeugbetrieb durch eine externe Datenverarbeitungsanlage zu tätigen, d. h. die Authentifizierung erfolgt nicht länger über eine unmittelbar mit dem Tachographen verbundene Unternehmenskarte, sondern über ein Remote-Upload/Download-Verfahren. Die Funktion schaltet also zunächst die weitere Schnittstelle frei und ermöglicht den Anschluss eines weiteren Moduls, welches zur eigentlichen kabellosen bzw. funkbasierten Kommunikation zwischen dem Tachographen und der externen Datenverarbeitungsanlage zuständig ist. Zugleich wird festgelegt, dass die Kommunikation zwischen dem Tachographen und der externen Datenverarbeitungsanlage lediglich mit denjenigen externen Datenverarbeitungsanlagen vorgenommen wird, welche durch die spezielle Unternehmenskarte identifiziert sind. Hierdurch wird verhindert, dass die Daten durch fremde Benutzer heruntergeladen oder entwendet werden können. Von daher ist vorzugsweise nicht nur eine Authentifizierung, sondern auch eine Verschlüsselung der kabellosen Verbindung zwischen dem Tachographen und der externen Datenverarbeitungsanlage anzuwenden.

Weitere Ausführungsformen des erfindungsgemäßen Verfahrens sind in den untergeordneten Ansprüchen beschrieben.

In einer Ausführungsform wird die Freischaltung der Funktion an einer durch das externe Speichermedium festgelegten Anzahl von Tachographen durchgeführt. Hierdurch ist es möglich, mittels eines externen Speichermediums eine Vielzahl von Tachographen hinsichtlich der mit der mindestens einen Anweisung verknüpften Funktion freizuschalten. Beim Erwerb des externen Speichermediums kann angegeben werden, wie viele Tachographen freigeschaltet werden sollen, und durch Zahlung einer der Anzahl entsprechenden Gebühr mittels einer Speicherkarte die Freischaltung an einer der Anzahl entsprechenden Vielzahl von Tachographen der Fahrzeugflotte erfolgen. Hierzu wird beispielsweise auf dem externen Speichermedium ein elektronischer Zähler angeordnet, wobei auf dem externen Speichermedium die festgelegte Anzahl und/oder die Anzahl der bereits mittels des externen Speichermediums erfolgten Freischaltungen und/oder der Differenzbetrag dieser beiden Größen gespeichert ist. Selbstverständlich können mittels des externen Speichermediums auch eine Vielzahl von Funktionen freigeschaltet werden. Auch hierbei kann der elektronische Zähler feststellen, wie viele Freischaltungen von Funktionen bereits

erfolgt sind, und speichern, wie viele weitere Freischaltungen möglich sind.

In einer weiteren Ausführungsform wird das externe Speichermedium in Form einer Speicherkarte ausgeführt. Hierbei ist die Schnittstelle des mindestens einen Tachographen ein Speicherkartenlesegerät, wie es bei digitalen Tachographen bereits verwendet wird. Hierdurch sind keine baulichen Änderungen am Tachographen notwendig.

In einer weiteren Ausführungsform ist die Steuerungseinheit programmtechnisch zur Ausführung einer zweiten Gruppe von Funktionen ausgebildet, wobei die Funktionen der zweiten Gruppe vorzugsweise bereits in der Steuerungseinheit vorhanden, jedoch nicht durch die Steuerungseinheit ausführbar sind. Hierdurch kann der Tachograph bereits sämtliche Funktionen beinhalten, so dass die Freischaltung der Funktionen mittels des externen Speichermediums keinen weiteren zusätzlichen Speicherplatz beansprucht.

Hierbei kann die mindestens eine Anweisung eine Funktion der zweiten Gruppe zur ersten Gruppe zuordnen. In diesem Fall wird beispielsweise in einem Speichermedium der Steuerungseinheit lediglich eine Umadressierung der Funktion vorgenommen, so dass diese durch die Steuerungseinheit ausführbar wird.

Nachfolgend soll die Erfindung anhand eines Ausführungsbeispiels genauer erläutert werden. Es zeigen
- Fig. 1: eine schematische Darstellung eines Systems zur Durchführung des Verfahrens;
- Fig. 2: ein schematisches Ablaufdiagramm des Verfahrens;
- Fig. 3: eine schematische Darstellung der Zuordnung von Funktionen und deren Freischaltung.

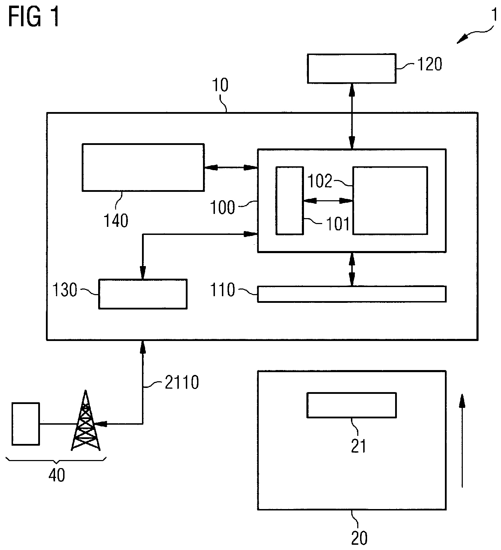

Die Fig. 1 zeigt ein beispielhaftes System 1, welches einen digitalen Tachographen 10 und ein als Speicherkarte ausgebildetes externes Speichermedium 20 umfasst.

Der digitale Tachograph 10 weist eine Steuerungseinheit 100 auf, welche einen Mikroprozessor 101 und einen Speicher 102 umfasst. Die Steuerungseinheit 100 steht in Verbindung mit einer Schnittstelle 110, welche als Kartenlesegerät ausgebildet ist und die Speicherkarte aufnehmen kann. Weiterhin ist die Steuerungseinheit 100 mit einer CAN-Schnittstelle 120 verbunden, wobei die CAN-Schnittstelle 120 mit der Bordsteuerung und/oder der Motorsteuerung des Kraftfahrzeugs, in welchem der digitale Tachograph 10 eingebaut ist, in Verbindung steht. Zudem weist der digitale Tachograph 10 eine weitere, über die Vorderseite des digitalen Tachographen zugängige weitere Schnittstelle 130 auf, an welcher zusätzliche Gerätemodule oder Diagnosewerkzeuge angeschlossen werden können. Ein zusätzliches Gerätemodul könnte beispielsweise ein GSM- bzw. UMTS-Modul zur kabellosen Datenübertragung mit einer externen Datenverarbeitungsanlage 40 sein. Weiterhin weist der digitale Tachograph 10 ein LC-Display 140 auf, in welchem Steuerbefehle für den Benutzer des digitalen Tachographen 10 sichtbar ausgegeben werden können.

In der Steuerungseinheit 100 stehen der Mikroprozessor 101 und der Speicher 102, welcher beispielsweise als Flashspeicher oder EEPROM ausgebildet sein kann, in Verbindung. In dem Speicher 102 sind eine Vielzahl von Befehlen bzw. Funktionen abgelegt, welche durch den Mikroprozessor 101 ausgeführt werden können. Hierbei ist zwischen einer ersten Gruppe von Funktionen, auf welche der Mikroprozessor 101 zugreifen kann, und einer zweiten Gruppe von Funktionen, welche zwar vorhanden sind, auf welche der Mikroprozessor 101 jedoch nicht zugreifen kann, zu unterscheiden.

Die als Kartenlesegerät ausgebildete Schnittstelle 110 kann das externe Speichermedium 20 aufnehmen. Dabei wird ein auf dem externen Speichermedium 20 angeordneter Speicherchip 21 ausgelesen. Der Speicherchip 21 ist dabei programmtechnisch derart ausgebildet, dass eine Anweisung zum Freischalten einer Funktion auf dem Speicherchip 21 abgelegt ist. Die Anweisung zum Freischalten einer Funktion kann dabei dazu führen, dass in der Steuerungseinheit 100 eine im Speicher 102 befindliche Funktion freigeschaltet wird, welche den kabellosen Datenaustausch 2110 über ein mit der weiteren Schnittstelle 130 verbindbares Kartenmodul und der externen Datenverarbeitungsanlage 40 ermöglicht.

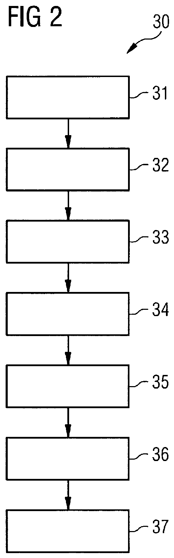

Im Folgenden soll eine spezielle Ausführungsform des erfindungsgemäßen Verfahrens anhand des Ablaufdiagrammes der Fig. 2 genauer erläutert werden. Zunächst wird im Rahmen des Verfahrens 30 eine Verbindung 31 zwischen dem externen Speichermedium und der Schnittstelle des mindestens Tachographen hergestellt. Dies kann beispielsweise auf das System 1 der Fig. 1 bezogen das Einführen der Speicherkarte in das Kartenlesegerät sein. Nachdem die Verbindung 31 hergestellt wurde, wird das externe Speichermedium durch die Steuerungseinheit ausgelesen. Hierbei findet eine Überprüfung 32 statt, mittels welcher festgestellt wird, ob die in der mindestens einen Anweisung zum Freischalten einer Funktion umfasste Funktion bereits auf dem Tachographen installiert ist oder nicht. Für den Fall, dass die Funktion bereits installiert ist, kann das externe Speichermedium automatisiert aus dem digitalen Tachographen ausgeworfen werden. Ist die durch die Anweisung umfasste Funktion noch nicht auf dem digitalen Tachographen freigeschaltet, erfolgt eine Authentifizierung 33 zwischen dem externen Speichermedium und der Steuerungseinheit des Tachographen. Dies kann beispielsweise dadurch erfolgen, dass das externe Speichermedium in einer externen Datenverarbeitungsanlage, wie beispielsweise der Datenverarbeitungsanlage 40, des Unternehmens durch die im Unternehmen vorhandene Unternehmenskarte mit den der Unternehmenskarte zugeordneten Informationen authentifiziert wird.

Bei der Authentifizierung 33 liest die Steuerungseinheit zunächst die Daten des externen Speichermediums aus und identifiziert, ob diese derselben Unternehmenskarte, welche zum Auslesen von Informationen aus dem Tachographen notwendig ist, zugeordnet werden kann. Im Gegenzug liest das externe Speichermedium aus, ob die Steuerungseinheit ebenfalls dieser Unternehmenskarte zugeordnet werden kann. Zur zusätzlichen Absicherung kann der Datenaustausch zwischen dem externen Speichermedium und der Steuerungseinheit verschlüsselt erfolgen, um das missbräuchliche Auslesen von auf dem Tachographen gespeicherten Daten mittels manipulierter externer Speichermedien zu verhindern.

Nach einer positiven Authentifizierung findet eine Überprüfung 34 statt, bei welcher ermittelt wird, ob die auf dem externen Speichermedium festgelegte Anzahl von Freischaltungen der Funktionen bereits erreicht wurde oder noch weitere Freischaltungen der Funktion möglich sind. Sollte eine weitere Freischaltung möglich sein, erfolgt die Freischaltung 35 der Funktion aufgrund der auf dem externen Speichermedium mindestens einen abgelegten Anweisung. Die Anweisung kann beispielsweise durch Befehlssequenzen oder den Übertrag von Parametern ausgeführt werden. Die Befehlssequenzen können dabei im Wesentlichen neue Funktionen und/oder aktualisierte Funktionen beinhalten oder die Steuerungseinheit dahingehend anweisen, eine beispielsweise bislang der zweiten Gruppe von Funktionen zugeordnete Funktion der ersten Gruppe zuzuordnen.

Nachdem die Freischaltung 35 vollzogen ist, findet eine weitere Überprüfung 36 statt, bei welcher die ordnungsgemäße Ausführbarkeit der freigeschalteten Funktion überprüft wird. Im Rahmen der Überprüfung 36 kann ebenfalls der elektronische Zähler des externen Speichermediums aktiviert und die Anzahl der noch möglichen Freischaltungen um eins oder um die Anzahl der freigeschalteten Funktionen herabgesetzt werden.

Die Veränderung der im elektronischen Zähler abgespeicherten Werte erfolgt vorzugsweise nur, wenn die Funktionalität erfolgreich überprüft wurde.

Abschließend wird das externe Speichermedium aus dem Tachographen ausgeworfen, so dass eine Lösung 37 der Verbindung zwischen dem externen Speichermedium und der Schnittstelle des mindestens einen Tachographen erfolgt.

Die verschiedenen Verfahrensschritte 31 bis 37 begleitend können Mitteilungen auf einem Display des digitalen Tachographen ausgegeben werden. Auf diese Weise kann der das Verfahren überwachende Benutzer nachvollziehen, ob die verschiedenen Verfahrensschritte erfolgreich abgeschlossen wurden. Um diese Überwachung auch nachträglich zu ermöglichen, kann zusätzlich eine sogenannte Logdatei auf dem externen Speichermedium vor dem Auswerfen des externen Speichermediums abgelegt werden. Diese Logdatei kann beispielsweise durch die externe Datenverarbeitungsanlage ausgelesen und überprüft werden.

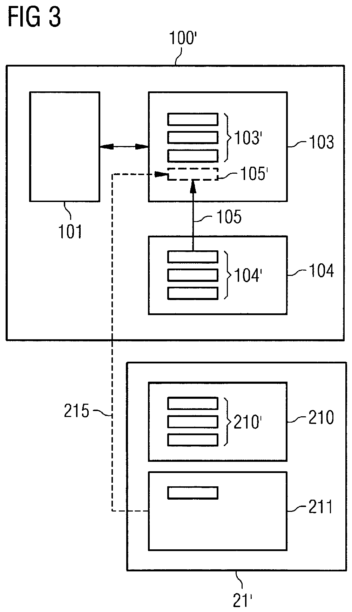

Anhand der Fig. 3 soll illustriert werden, wie anhand einer Anweisung, welche auf dem externen Speichermedium abgelegt ist, eine Funktion freigeschaltet werden kann. Die Fig. 3 zeigt eine Steuerungseinheit 100' mit einem Mikroprozessor 101 und einem Speicher 102'. Der Speicher 102' umfasst unter anderem eine ersten Gruppe 103 von Funktionen und eine zweite Gruppe 104 von Funktionen. Die erste Gruppe 103 beinhaltet Funktionen 103', welche durch den Mikroprozessor 101 ausführbar sind. Dies wird durch die Verbindung zwischen der ersten Gruppe 103 und dem Mikroprozessor 101 angedeutet.

Die zweite Gruppe 104 beinhaltet eine Vielzahl von Funktionen 104', auf welche der Mikroprozessor 101 nicht zugreifen kann.

Der Speicherchip 21' umfasst eine Anweisung 210, wobei die Anweisung 210 eine Vielzahl von Steuerbefehlen 210' umfasst. Zudem ist eine weitere Anweisung 211 vorhanden.

In einem ersten Betriebsmodus wird, nachdem eine Verbindung zwischen dem auf einem externen Speichermedium abgelegten Speicherchip 21' und der Steuerungseinheit 100' hergestellt wurde, die Anweisung 210 durch den Mikroprozessor 101 ausgelesen. Die Funktionen 210' sind dabei Funktionen, welche eine Teilmenge der Funktionen 103' aktualisieren, d. h. die Teilmenge der Funktionen 103' durch die Funktionen 210' ersetzt. Hierdurch ist es möglich, die Steuerungseinheit 100' des digitalen Tachographen ständig in einer aktualisierten Version zu betreiben.

In einer zweiten Betriebsart kann die Anweisung 210 Funktionen 210' beinhalten, durch welche der Mikroprozessor 101 angewiesen wird, eine bislang der zweiten Gruppe 104 zugeordnete Funktion nunmehr der ersten Gruppe 103 zuzuordnen. Diese der ersten Gruppe 103 neu zugeordnete Funktion 105' wird durch eine Adressänderung 105 als nunmehr der ersten Gruppe 103 zugehörig definiert.

In einer dritten Betriebsart ist es möglich, mittels der weiteren Anweisung 211 eine bislang nicht in der ersten Gruppe oder zweiten Gruppe vorhandene Funktion der ersten Gruppe 103 zuzuordnen. Hier erfolgt eine Adressänderung 215 bzw. ein Kopiervorgang der in der Anweisung 211 umfassten Funktion 211' zur Funktion 105'.

Die Anweisung 211 umfasst das Freischalten der Funktion zum kabellosen Datenaustausch 2110, wie in Fig. 1 gezeigt. Dieselbe Funktionalität kann jedoch auch durch eine Anweisung 210 freigeschaltet werden.

Außer der bislang angesprochenen Funktion zur programmtechnischen Ausbildung der weiteren Schnittstelle zu einem kabellosen Datenaustausch mit einer externen Datenverarbeitungsanlage können die freizuschaltenden Funktionen beispielsweise das Freischalten eines Drehzahlprofils, eines Geschwindigkeitsprofils oder das Aufzeichnen von weiteren durch die Bord- oder Motorsteuerung bereitgestellten Daten umfassen.

## Patentansprüche

1. Verfahren zum Freischalten von Funktionen (103', 104') mindestens eines Tachographen (10), welcher eine Steuerungseinheit (100; 100') und eine damit verbundene Schnittstelle (110) umfasst, wobei die Steuerungseinheit programmtechnisch zur Ausführung einer ersten Gruppe (103) von Funktionen freigeschaltet ist und das Verfahren folgende Schritte aufweist:
a) Verbindung (31) eines externen Speichermediums (20) mit der Schnittstelle (110) des mindestens einen Tachographen (10), wobei das Speichermedium eine durch die Steuerungseinheit auslesbare Anweisung (210, 211) zum Freischalten einer Funktion aufweist, wobei die Funktion eine vorhandene weitere Schnittstelle des Tachographen zu einem kabellosen Datenaustausch über die weitere Schnittstelle ausbildet;
b) Authentifizierung (33) zwischen dem externen Speichermedium und der Steuerungseinheit;
c) Freischaltung (35) der der Anweisung (210, 211) zugeordneten Funktion derart, dass die Funktion der ersten Gruppe (103) der Steuerungseinheit (100; 100') zugeordnet wird, wobei die Freischaltung (35) der Funktion an einer durch das externe Speichermedium festgelegten Anzahl von Tachographen durchführbar ist und die festgelegte Anzahl und/oder die Anzahl der bereits mittels des externen Speichermediums erfolgten Freischaltungen (35) und/oder der Betrag der Differenz zwischen der festgelegten Anzahl und der Anzahl der bereits mittels des externen Speichermediums erfolgten Freischaltungen auf dem externen Speichermedium gespeichert sind;
d) Lösung der Verbindung (31) zwischen dem externen Speichermedium und der Schnittstelle des mindestens einen Tachographen.

2. Verfahren nach Anspruch 1, **dadurch gekennzeichnet, dass** der mindestens eine Tachograph ein Display (140) aufweist und eine erfolgreiche und/oder fehlgeschlagene Freischaltung (35) einer Funktion im Display angezeigt wird.

3. Verfahren nach einem der vorhergehenden Ansprüche, **dadurch gekennzeichnet, dass** das externe Speichermedium (20) auf einer Speicherkarte angeordnet ist und die Schnittstelle des mindestens einen Tachographen ein Speicherkartenlesegerät ist.

4. Verfahren nach einem der vorhergehenden Ansprüche, **dadurch gekennzeichnet, dass** die Anweisung (210, 211) eine Funktion umfasst, welche eine bereits der ersten Gruppe (103) zugehörige Funktion (103') ersetzt oder aktualisiert.

5. Verfahren nach einem der vorhergehenden Ansprüche, **dadurch gekennzeichnet, dass** die Steuerungseinheit (100; 100') programmtechnisch zur Ausführung einer zweiten Gruppe (104') von Funktionen ausgebildet ist.

6. Verfahren nach Anspruch 5, **dadurch gekennzeichnet, dass** die Anweisung (210, 211) eine Funktion (104') der zweiten Gruppe (104) der ersten Gruppe (103) zuordnet.

7. Verfahren nach einem der vorhergehenden Ansprüche, **dadurch gekennzeichnet, dass** die weitere Schnittstelle (130) des Tachographen (10) eine von einer dem Fahrzeuginnenraum zugewandten Seite des Tachographen zugängige Schnittstelle ist.

## Claims

1. Method for enabling functions (103', 104') of at least one tachograph (10) which comprises a control unit (100; 100') and an interface (110) connected thereto, wherein the control unit is enabled by means of programming to perform a first group (103) of functions and the method has the following steps:
a) an external storage medium (20) is connected (31) to the interface (110) of the at least one tachograph (10), wherein the storage medium has one instruction (210, 211) which can be read by the control unit for the purpose of enabling a function, wherein the function produces an available further interface of the tachograph for the purpose of wireless data interchange via the further interface;
b) authentication (33) is performed between the external storage medium and the control unit;
c) the function associated with the instruction (210, 211) is enabled (35) such that the function from the first group (103) is associated with the control unit (100; 100') wherein the function can be enabled (35) on a number of tachographs which is stipulated by the external storage medium, and the stipulated number and/or the number of enabling operations (35) already performed by means of the external storage medium and/or the magnitude of the difference between the stipulated number and the number of enabling operations already performed by means of the external storage medium are stored on the external storage medium;
d) the connection (31) between the external storage medium and the interface of the at least one tachograph is broken.

2. Method according to Claim 1, **characterized in that** the at least one tachograph has a display (140), and successful and/or failed enabling (35) of a function is displayed in the display.

3. Method according to one of the preceding claims, **characterized in that** the external storage medium (20) is arranged on a memory card, and the interface of the at least one tachograph is a memory card reader.

4. Method according to one of the preceding claims, **characterized in that** the instruction (210, 211) comprises a function which replaces or updates a function (103') which is already associated with the first group (103).

5. Method according to one of the preceding claims, **characterized in that** the control unit (100; 100') is designed by means of programming to perform a second group (104') of functions.

6. Method according to Claim 5, **characterized in that** the instruction (210, 211) associates a function (104') from the second group (104) with the first group (103).

7. Method according to one of the preceding claims, **characterized in that** the further interface (130) of the tachograph (10) is an interface which is accessible from a side of the tachograph which faces the vehicle interior.

## Revendications

1. Procédé d'activation de fonctions (103', 104') d'au moins un tachygraphe (10) qui comprend une unité de commande (100, 100') et une interface (110) reliée à celle-ci, l'unité de commande étant activée par programme pour exécuter un premier groupe (103) de fonctions et le procédé comprenant les étapes suivantes :
a) relier (31) un support de stockage externe (20) à l'interface (110) de l'au moins un tachygraphe (10), le support de stockage comportant une instruction (210, 211), lisible par l'unité de commande, pour activer une fonction, la fonction formant une autre interface existante du tachygraphe pour un échange de données sans fil via l'autre interface ;
b) effectuer une authentification (33) entre le support de stockage externe et l'unité de commande ;
c) activer (35) la fonction associée à l'instruction (210, 211) de façon à attribuer la fonction du premier groupe (103) à l'unité de commande (100, 100'), l'activation (35) de la fonction pouvant être effectuée sur un nombre de tachygraphes déterminé par le support de stockage externe et le nombre déterminé et/ou le nombre d'activations (35) déjà effectuées par le support de stockage externe et/ou la valeur de la différence entre le nombre déterminé et le nombre d'activations déjà effectuées par le support de stockage externe étant mémorisés sur le support de stockage externe ;
d) supprimer la liaison (31) entre le support de stockage externe et l'interface de l'au moins un tachygraphe.

2. Procédé selon la revendication 1, **caractérisé en ce que** l'au moins un tachygraphe comporte un affichage (140) et une activation réussie et/ou manquée (35) d'une fonction est affichée.

3. Procédé selon l'une des revendications précédentes, **caractérisé en ce que** le support de stockage externe (20) est disposé sur une carte mémoire et l'interface de l'au moins un tachygraphe est un lecteur de carte mémoire.

4. Procédé selon l'une des revendications précédentes, **caractérisé en ce que** l'instruction (210, 211) comporte une fonction qui remplace ou actualise une fonction (103') déjà associée au premier groupe (103).

5. Procédé selon l'une des revendications précédentes, **caractérisé en ce que** l'unité de commande (100, 100') est conçue par programme pour exécuter un deuxième groupe (104') de fonctions.

6. Procédé selon la revendication 5, **caractérisé en ce que** l'instruction (210, 211) associe une fonction (104') du deuxième groupe (104) au premier groupe (103).

7. Procédé selon l'une des revendications précédentes, **caractérisé en ce que** l'autre interface (130) du tachygraphe (10) est une interface accessible depuis le côté du tachygraphe qui est dirigé vers l'espace intérieur du véhicule.
